Europäisches Patentamt

European Patent Office

Office européen des brevets

(19)

(11) **EP 0 568 454 B1**

(12) **FASCICULE DE BREVET EUROPEEN**

(45) Date de publication et mention
de la délivrance du brevet:
**23.12.1998 Bulletin 1998/52**

(51) Int Cl.⁶: **H04Q 11/00**

(21) Numéro de dépôt: **93401106.5**

(22) Date de dépôt: **28.04.1993**

(54) **Système optique configurable automatiquement, pour le raccordement d'installations d'abonné à un centre de commutation d'un réseau de télécommunication**

Automatisch konfigurierbares, optisches System zum Anschluss der Teilnehmereinrichtungen an eine Vermittlungszentrale eines Telekommunikationsnetzes

Automatically configurable optical system for connecting subscriber installations to a switching centre in a telecommunications network

(84) Etats contractants désignés:
**AT BE CH DE ES FR GB IT LI NL SE**

(30) Priorité: **30.04.1992 FR 9205400**

(43) Date de publication de la demande:
**03.11.1993 Bulletin 1993/44**

(73) Titulaire: **ALCATEL ALSTHOM COMPAGNIE GENERALE D'ELECTRICITE**
**75008 Paris (FR)**

(72) Inventeurs:
• **Vinel, Paul**
  **F-78140 Velizy (FR)**
• **Perrier, Philippe**
  **F-75013 Paris (FR)**

(74) Mandataire: **Sciaux, Edmond et al**
**COMPAGNIE FINANCIERE ALCATEL**
**Dépt. Propr. Industrielle,**
**30, avenue Kléber**
**75116 Paris (FR)**

(56) Documents cités:
**US-A- 4 768 188**

• **PROCEEDINGS. THE INTERNATIONAL SWITCHING SYMPOSIUM, 28 MEI-1 JUIN 1990, VOL.1 PAGES 147-152, STOCKHOLM SE , XP130835 A. FIORETTI ET AL 'A Novel Distributed**
• **Photonic Switch'**
• **PROCEEDINGS OF THE INTERNATIONAL SYMPOSIUM ON SUBSCRIBER LOOPS AND SERVICES, 29 SEPT.- 3 OCT. 1986, PAGES 187-192, TOKYO JP pages 187 - 192 , XP67758 K. MURANO ET AL 'A Flexible and Autonomous Network Configuration for Broadband Subscriber Loop Transmission'**

**Description**

L'invention conceme un système optique configurable automatiquement pour le raccordement d'installations d'abonné à un centre de commutation d'un réseau de télécommunications.

Le document PROCEEDINGS OF THE INTERNATIONAL SWITCHING SYMPOSIUM, 28 MAY - 1 JUNE 1990, VOL 1, PAGES 147-152, STOCKOLM SE, XP130835, A. FIORETTI ET AL," A Novel Distributed Switch", décrit un système optique pour le raccordement d'installations d'abonné, constitué de noeuds d'accès photoniques raccordés entre eux par un coupleur passif en étoile, d'une part, et raccordés à des installations d'abonné par des fibres optiques, d'autre part. Chaque installation d'abonné comporte un émetteur optique et un récepteur optique accordés sur une même longueur d'onde réglable. Un canal de signalisation commun permet de diffuser des informations de commande pour attribuer des longueurs d'onde respectivement aux émetteurs optiques. Il n'y a pas de centre de commutation proprement dit, la fonction de commutation est répartie dans les moyens de commande des différents noeuds d'accès constituant ce système. Ce document ne décrit pas comment ces moyens de commande connaissent la configuration du système.

La demande de brevet français n° 2 682 240 décrit un système de raccordement optique comportant un centre de commutation appartenant à un réseau de télécommunication à large bande. Ce centre de commutation est reliés à des installations d'abonné par un réseau de diffusion optique comportant des fibres optiques couplées d'une part à des équipements appelés joncteurs, situés dans le centre de commutation, et couplés d'autre part aux installations d'abonné. Pour faciliter la diffusion d'un tel système de raccordement, il est nécessaire de minimiser le coût de mise en route de chaque installation d'abonné, et d'assurer une grande fiabilité aux services.

Chaque joncteur comporte un émetteur optique et un récepteur optique ayant une même longueur d'onde fixée, différente pour chaque joncteur; et chaque installation d'abonné comporte un émetteur optique et un récepteur optique accordés sur une longueur d'onde réglable. Une longueur d'onde est affectée à une installation d'abonné par une unité de commande située dans le centre, au moment de l'établissement de chaque communication entre cette installation d'abonné et un joncteur. Le nombre d'installations d'abonné est très supérieur au nombre de joncteurs auxquels elles sont reliées, parce que les installations d'abonnés ne sont pas toutes en cours de communication à chaque instant. L'affectation dynamique des longueurs d'onde aux installations d'abonné permet de réutiliser une même longueur d'onde pour différentes installations d'abonnés qui établissent des communications non simultanées.

Un groupe d'installations d'abonné est relié à un groupe de joncteurs, par l'intermédiaire d'un réseau de distribution ayant la propriété de diffuser un signal optique émis par l'un quelconque des émetteurs du système de raccordement vers chacun des récepteurs optiques du système de raccordement. Un centre de commutation peut comporter plusieurs systèmes de raccordement identiques comportant chacun un groupe de joncteurs, reliés à un groupe d'installations d'abonné par des réseaux de diffusion indépendants les uns des autres, de manière à pouvoir réutiliser plusieurs fois un même ensemble de longueurs d'onde.

Dans chaque groupe de joncteurs, un joncteur dit de commande est utilisé pour l'établissement des communications. Lorsqu'une installation d'abonné devient active, elle envoie un message en utilisant la longueur d'onde du joncteur de commande. Le joncteur de commande transmet le message aux moyens de commande du central. Les moyens de commande indiquent au joncteur de commande l'identité d'un joncteur disponible pour établir une communication. Le joncteur de commande envoie un message à l'installation d'abonné, sur la longueur d'onde du joncteur de commande. Ce message indique à l'installation d'abonné l'identité du joncteur disponible. L'installation d'abonné en déduit la longueur d'onde sur laquelle elle doit émettre et recevoir pour utiliser le joncteur affecté à la communication. Cette longueur d'onde est affectée à cette installation d'abonné pour toute la durée de cette communication, et seulement pour cette durée.

Pour qu'une installation d'abonné soit en mesure de fonctionner, il est nécessaire qu'elle connaisse la longueur d'onde du joncteur de commande, et la relation entre les identités indiquées dans les messages envoyés par le joncteur de commande, et les longueurs d'onde. Dans ce système connu, une installation d'abonné ne peut connaître ces informations que si elles lui sont fournies au moment où elle est installée. Par exemple, il est envisageable de programmer manuellement ces informations dans l'installation d'abonné au moyen de petits commutateurs, ou bien en embrochant un boîtier de mémoire morte.

Un tel procédé a pour inconvénient de nécessiter un certain travail chaque fois qu'une installation d'abonné est installée; et d'autre part de manquer de souplesse, puisqu'il n'est pas possible de remplacer un joncteur défaillant par un autre joncteur ayant une longueur d'onde différente, sous peine de devoir refaire le même travail sur toutes les installations d'abonné. En particulier, il n'est pas possible d'attribuer la fonction de joncteur de commande à n'importe lequel des joncteurs installés dans le centre de commutation. En cas de défaillance d'un joncteur, il est nécessaire de le remplacer par un autre joncteur ayant la même longueur d'onde. Par conséquent, il faut soit garder en réserve un grand nombre de joncteurs ayant des longueurs d'onde prédéterminées; soit garder en réserve un joncteur unique, ayant une longueur d'onde réglable au moment de sa mise en fonctionnement.

Le but de l'invention est de proposer un système de raccordement qui soit configurable et reconfigurable automatiquement, pour éviter un travail sur chaque installation d'abonné au moment où celle-ci est installée, et pour minimiser les perturbations de services en cas de panne dans un joncteur ou dans le réseau de distribution.

L'objet de l'invention est un système optique configurable automatiquement, selon la revendication 1.

Le système ainsi caractérisé permet à chaque installation d'abonné, lors de sa mise en fonctionnement, de déterminer automatiquement la configuration du système, c'est-à-dire d'établir une relation entre les différentes longueurs d'onde qu'elle peut recevoir et les différentes identités de joncteur qui peuvent être mentionnées dans les messages émis par le coupleur de commande, pour l'établissement de communications. Ce système permet aussi à l'installation d'abonné de distinguer automatiquement la longueur d'onde correspondant au joncteur de commande, sur laquelle chaque installation d'abonné doit rester en veille lorsqu'elle est inactive. Puisque ces informations peuvent être mises à jour cycliquement, les installations d'abonné peuvent connaître très rapidement les changements des fonctions attribuées aux différents joncteurs, pour remédier à la défaillance de l'un d'eux, ou d'une partie du réseau de distribution optique. Ces changement de fonction peuvent être manuels, ou résulter d'une procédure de test et de reconfiguration automatique.

Selon une autre caractéristique, dans le système selon l'invention, les moyens de commande du centre de commutation sont adaptés :

- à attribuer la fonction de joncteur de commande à l'un au moins des joncteurs ayant un fonctionnement correct;
- à surveiller le fonctionnement de chaque joncteur ;
- et à attribuer la fonction de joncteur de commande à un joncteur différent ayant un fonctionnement correct, si le précédent à une défaillance.

Le système ainsi caractérisé permet de reconfigurer automatiquement l'ensemble des joncteurs en cas de défaillance de l'un d'eux, puisque le centre de commutation comporte des moyens pour attribuer la fonction de joncteur de commande à un autre joncteur ; et que chaque installation d'abonné peut prendre en compte automatiquement ce changement de joncteur de commande.

Selon une autre caractéristique, le centre de commutation comporte au moins un premier étage de coupleurs optiques reliés d'une part aux joncteurs, et d'autre part au réseau de diffusion optique ; et en ce que le réseau de diffusion optique comporte:

- au moins un second étage de coupleurs optiques reliés d'une part au premier étage de coupleurs optiques , et reliés d'autre part aux installations d'abonné ;
- et des fibres optiques reliant les coupleurs du premier étage aux coupleurs du second étage; chaque coupleur du second étage étant relié à au moins un coupleur du premier étage par au moins deux fibres optiques, en passant par des chemins différents, de telle sorte que la défaillance d'une de ces fibres optiques n'empêche aucune installation d'abonné d'être reliée à au moins un joncteur.

Le système ainsi caractérisé est particulièrement fiable puisqu'il permet le maintien d'au moins une partie des services de télécommunication accessibles à un abonné, lorsqu'une défaillance se produit entre les deux étages du réseau de diffusion optique, c'est-à-dire sur les câbles optiques reliant le centre de commutation à un joncteur desservant un petit groupe d'installations d'abonné.

L'invention sera mieux comprise et d'autres détails apparaîtront à l'aide de la description ci-dessous et des figures l'accompagnant :

- la figure 1 représente le schéma synoptique d'un exemple de réalisation du système de raccordement, selon l'invention;
- la figure 2 représente des diagrammes temporels illustrant le fonctionnement de cet exemple de réalisation;
- la figure 3 représente un schéma fonctionnel de cet exemple de réalisation;
- la figure 4 représente des chronogrammes illustrant le fonctionnement de cet exemple de réalisation;
- la figure 5 illustre les principales étapes de l'établissement d'une communication dans cet exemple de réalisation;
- la figure 6 représente le schéma synoptique d'un exemple de réalisation d'une installation d'abonné;
- la figure 7 représente le schéma synoptique d'une exemple de réalisation du joncteur destiné à fonctionner en liaison avec l'installation d'abonné dont le schéma synoptique est représenté sur la figure 6;
- les figures 8 et 9 illustrent par des chronogrammes l'échange d'informations entre cette installation d'abonné et ce joncteur;
- la figure 10 représente le schéma synoptique d'un exemple de réalisation d'un réseau de diffusion permettant de limiter l'effet d'une coupure d'un câble de transmission, dans un exemple de réalisation du système selon l'invention.

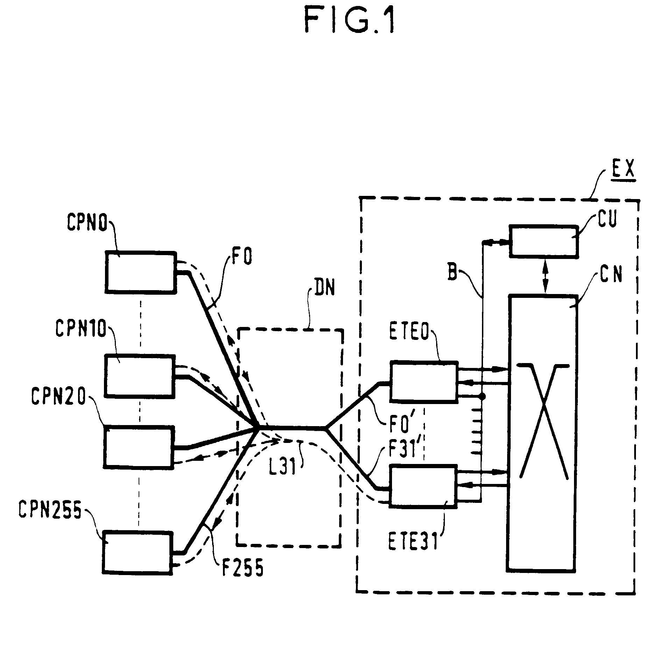

La figure 1 représente un exemple de réalisation du système de raccordement, selon l'invention, comportant un groupe de 256 installations d'abonné, CPN0, ..., CPN255, reliées par un réseau de distribution optique DN à un central de commutation EX faisant partie d'un réseau de télécommunication à large bande, mettant en oeuvre le mode de transfert asynchrone. Le nombre de 256 CPN est donné à titre d'exemple. Le nombre total de CPN peut être plus élevé. La limitation provient des possibilités de transmission optique. Chacune des installations d'abonné CPN0, ..., CPN255 possède une entrée-sortie optique qui est reliée par une fibre optique unique (F0, ..., F255) au réseau de distribution DN, qui est représenté comme une simple fibre optique sur ce schéma synoptique. Le central EX comporte un réseau de connexion CN et 32 joncteurs ETE0, ..., ETE31. Chaque joncteur comporte une entrée-sortie optique reliée par une fibre optique unique F0', ..., F31' au réseau de distribution DN; une entrée électrique et une sortie électrique reliées respectivement à une sortie électrique et à une entrée électrique du réseau de connexion CN. Le central EX comporte en outre une unité de commande CU reliée par une liaison B à chacun des joncteurs ETE0, ..., ET31; et reliée à une entrée sortie du réseau de connexion CN.

Une longueur d'onde fixée est attribuée à chacun des trente deux joncteurs, pour l'émission et pour la réception. Dans cet exemple, on suppose que la technologie disponible permet de réaliser une émission ou une réception sur trente deux longueurs d'onde différentes. Naturellement il est possible de prévoir plusieurs groupes de trente deux joncteurs dans le même central, chaque groupe de joncteurs étant associé à un réseau de distribution optique indépendant des autres réseaux de distribution optique pour éviter la superposition de signaux ayant une même longueur d'onde; et chaque groupe de trente deux joncteurs étant associé à un groupe de 256 installations d'abonné.

La fonction de joncteur de commande est attribuée à l'un des trente deux joncteurs, par l'unité de commande CU. Cette attribution peut être reconsidérée si l'unité de commande CU détecte que le joncteur choisi ne fonctionne plus correctement.

L'unité de commande CU surveille en permanence le fonctionnement de chaque joncteur ETE0, ..., ETE31, en vérifiant le bon déroulement de chaque communication attribuée à un joncteur, et en vérifiant que le joncteur de commande est effectivement capable d'émettre et de recevoir des messages. En cas de défaillance d'un joncteur celui-ci n'est plus utilisé et ses fonctions sont attribuées à un autre joncteur. Cet autre joncteur peut être un joncteur de secours qui est installé mais qui n'est pas utilisé habituellement. Par exemple, on peut prévoir un joncteur de secours par groupe de trente deux joncteurs. Si c'est le joncteur de commande qui est défaillant, la panne est particulièrement grave car il n'est plus possible d'établir une communication entre une installation d'abonné et l'un quelconque des autres joncteurs.

Mais l'unité de commande CU peut remédier à cette panne, sans délai, en attribuant la fonction de joncteur de commande à un autre joncteur ayant un bon fonctionnement : tous les joncteurs sont identiques, à l'exception de leurs longueurs d'onde qui sont fixées.

Ils comportent tous des moyens de commande leur permettant de remplir : soit la fonction de joncteur de commande, soit la jonction de joncteur de communication; selon la fonction attribuée par l'unité de commande. Quand le joncteur de commande est remplacé par un autre, toutes les installations d'abonné doivent changer la longueur d'onde sur laquelle elles restent en veille pour recevoir des appels et sur laquelle elles demandent l'établissement d'une communication. De même lorsqu'une installation d'abonné vient d'être crée, elle commence par déterminer quelle est la configuration du système de raccordement, c'est-à-dire la relation entre les 32 longueurs que son récepteur peut recevoir et les numéros identifiant les joncteurs avec lesquels elle peut communiquer.

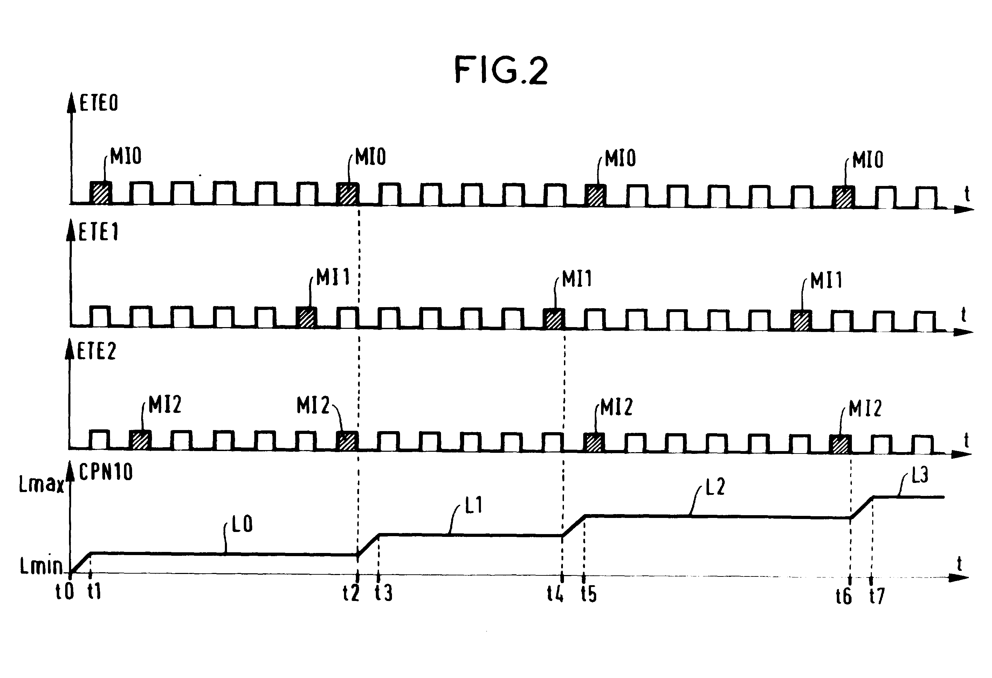

La figure 2 illustre le fonctionnement de l'exemple de réalisation décrit ci-dessus, en ce qui concerne la détermination de la configuration du système. Les trois premiers diagrammes temporels représentent les cellules émises respectivement par les joncteurs ETE0, ETE1, ETE2 pris à titre d'exemple. Le dernier diagramme temporel représente la valeur de la longueur d'onde sur laquelle est accordé le récepteur d'une installation d'abonné qui est en veille par exemple CPN10. Pour déterminer quelles sont les longueurs d'onde utilisées par les joncteurs, le récepteur explore de manière continue toute la gamme, Lmin à Lmax, des longueurs d'onde possibles pour les joncteurs. Chaque joncteur émet en permanence des cellules. Ces cellules sont vides si le joncteur n'a pas d'informations à transmettre. Cycliquement, il émet une cellule contenant un message d'identification : MI0, MI1, MI2 respectivement pour ETE0, ETE1, ETE2.

Le récepteur commence à l'instant t0 en s'accordant sur la longueur Lmin. A l'instant t1 il reçoit un signal sur la longueur d'onde L0. Il asservie l'accord de son filtre pour le régler parfaitement sur la longueur d'onde L0 du signal reçu et il attend la détection d'un message d'identification sur cette longueur d'onde. A l'instant t2 il reçoit un message d'identification MI0 lui indiquant que c'est le joncteur ETE0 qui émet, et qu'il est un joncteur de commande, dans cet exemple. L'installation d'abonné mémorise : la longueur d'onde L0, en mémorisant une valeur de paramètre de réglage du filtre; l'identité du joncteur ETE0; et un bit indiquant qu'il est joncteur de commande. Puis le récepteur reprend son exploration de la gamme.

A l'instant t3, cette exploration est de nouveau arrêtée car le récepteur a détecté un signal sur la longueur d'onde L1. Il attend alors la réception d'un message d'identification. Il reçoit un message MI1, à l'instant t4. Il mémorise: la longueur d'onde L1, l'identité du joncteur ETE1, et un bit indiquant qu'il n'est pas joncteur de commande. Puis il reprend son exploration de la gamme.

A l'instant t5, le récepteur arrête de nouveau son exploration car il reçoit un signal sur la longueur d'onde L2. Il attend alors la réception d'un message d'identification sur cette longueur d'onde. Il reçoit un message d'identification MI2, à l'instant t6. Il mémorise: la longueur d'onde L2, l'identité du joncteur ETE2, et un bit indiquant qu'il n'est pas un joncteur de commande. Puis il reprend l'exploration de la gamme.

Cette exploration continue jusqu'à la longueur d'onde maximale Lmax puis le récepteur repasse en veille sur la longueur d'onde L0 du joncteur de commande.

L'exploration sera recommencée ultérieurement, de manière cyclique. Elle peut être interrompue si l'installation d'abonné est utilisée, par exemple pour établir une communication. La durée d'attente d'un message d'identification est limitée à un délai prédéterminé : si le récepteur ne détecte pas de message d'identification dans ce délai, il reprend son exploration de la gamme.

Le nombre d'installations d'abonné reliées à un groupe de joncteurs dépend de la charge que ces installations d'abonné apportent au groupe de joncteurs. En général les installations d'abonnés ne sont pas actives simultanément, c'est-à-dire ne sont pas toutes en communication simultanément. Par conséquent le nombre de joncteurs peut être inférieur au nombre d'installations d'abonné. Selon un mode de réalisation préférentiel, un multiplexage temporel réalisé dans le système de raccordements selon l'invention permet de multiplier le nombre d'installations d'abonné, dès lors que celles-ci ont besoin d'une bande passante nettement inférieure à celle procurée par un joncteur.

Lorsqu'une installation d'abonné est inactive, son récepteur est en veille sur la longueur d'onde du joncteur de commande. Lorsqu'une communication est établie entre une installation d'abonné et un joncteur, l'émetteur optique et le récepteur optique de l'installation d'abonné sont réglés sur la longueur d'onde de ce joncteur. Pour mieux utiliser la bande passante des joncteurs, une même longueur d'onde peut être attribuée à plusieurs installations d'abonné pour plusieurs comunications simultanées, en l'attribuant à chaque communication pendant des intervalles de temps séparés des intervalles de temps correspondant aux autres communications.

Par exemple, sur la figure 1, les installations d'abonnés CPN0, CPN10, CPN20, communiquent avec le joncteur ETE31 sur une même longueur d'onde L31. Les informations échangées entre les installations d'abonné et les joncteurs sont sous la forme de cellules selon un format normalisé pour le mode de transfert asynchrone. Pour que les informations émises par les trois installations d'abonné CPN0, CPN10, CPN20 n'interfèrent pas, les cellules contenant ces informations sont transmises pendant des intervalles de temps disjoints, qui peuvent être répétés périodiquement, pour constituer une sorte de multiplexage temporel qui se superpose au multiplexage spectral réalisé par le réseau de distribution optique.

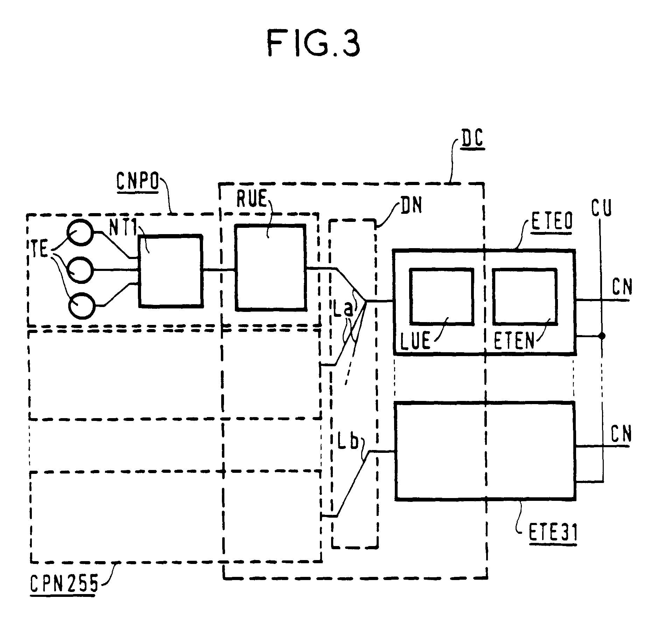

La figure 3 représente un schéma fonctionnel de cet exemple de réalisation du système de raccordement, selon l'invention. Ce schéma fonctionnel fait apparaître les fonctions nouvelles par rapport à celles déjà existantes dans le système décrit dans la demande de brevet français n° 91 12264. Toutes les installations d'abonné CPN0, ..., CPN255 peuvent être constituées de blocs fonctionnels identiques.

Par exemple, l'installation d'abonné CPN0 comporte : un ou plusieurs terminaux TE, tels que des postes téléphoniques, vidéophones, téléfax, calculateur, poste de télévision, etc; une terminaison numérique d'abonné NT1 telle que définie par le CCITT dans la recommandation I413; et un équipement d'usager éloigné RUE. L'équipement d'usager éloigné RUE remplit les fonctions connues décrites dans la demande de brevet FR-A-2682240, pour l'affection d'une longueur d'onde à l'installation d'abonné CPN0, plus : des fonctions supplémentaires pour le multiplexage temporel, consistant essentiellement à commander l'émission des informations seulement pendant un intervalle de temps défini par l'unité de commande CU du central; et des fonctions pour mémoriser les identités des joncteurs, et repérer le joncteur de commande.

Tous les joncteurs ETE0,. . . ,ETE1 sont constitués de blocs fonctionnels identiques. Par exemple le joncteur ETE0 comporte : un équipement de terminaison de central ETEN remplissant les fonctions connues à ce jour pour raccorder des abonnés, et un équipement d'usager local LUE qui remplit les fonctions décrites dans la demande de brevet français FR-A-2682240 et consistant essentiellement à émettre et à recevoir sur une longueur d'onde fixée, en convertissant des signaux optiques en signaux électriques pour les fournir au réseau de connexion; et réciproquement convertissant des signaux électriques en signaux optiques pour les fournir au réseau de distribution DN; plus : des fonctions supplémentaires nécessitées par le multiplexage temporel, et qui consistent entre autres à régulariser le débit des informations restituées par le joncteur au réseau de connexion CN, ainsi qu'à piloter ce multiplexage temporel; et des fonctions pour émettre cycliquemnt un message d'identification du joncteur.

La régulation de débit évite des pointes de débit préjudiciables au bon fonctionnement de ce réseau de connexion. En effet, le multiplexage temporel des informations conduit à regrouper les cellules dans des intervalles de temps correspondant respectivement aux différentes installations d'abonné qui émettent sur une même longueur d'onde. Comme ces cellules sont émises à un rythme qui peut être différent pour chacune des installations d'abonné, et comme le multiplexage temporel transmet par salves les cellules provenant de chaque installation d'abonné, le joncteur ETE0 reçoit des cellules avec un débit variable selon l'intervalle de temps considéré. En l'absence de régulation, le débit fourni au réseau de connexion CN comporterait donc des variations sensibles.

Les blocs fonctionnels RUE de l'ensemble des installations d'abonné CPN0, ..., CPN 255, et les blocs fonctionnels LUE de l'ensemble des joncteurs ETE0, ..., ETE31 constituent un concentrateur distribué DC.

L'établissement d'une communication, à la demande de l'une des installations d'abonné CPN0, ...,

CPN255 peut être déclenché selon divers procédés. A titre d'exemple, selon un premier procédé l'unité de commande CU fait émettre cycliquement, par le joncteur de commande, une suite de messages d'interrogation adressés respectivement à toutes les stations d'abonné qui sont inactives. Une installation d'abonné qui veut établir une communication répond immédiatement, en émettant un message destiné au joncteur de commande, sur la longueur d'onde de ce dernier. Selon un second procédé, chaque station d'abonné est autorisée pendant un bref intervalle de temps périodique à émettre un message à destination du joncteur de commande, sur la longueur d'onde de ce dernier. Pour appliquer ce second procédé, chaque station d'abonné doit être informée préalablement de : l'instant, la durée, et la période, de l'intervalle de temps où son émission est autorisée. Par exemple, ces paramètres sont fournis à l'installation d'abonné à la fin de chaque communication. La durée de cet intervalle de temps peut être très courte car le premier message envoyé au joncteur ne constitue qu'un appel et peut donc être limité à très peu d'informations. Après cette demande la communication demandée est établie en réalisant une sorte de multiplexage temporel, avec d'autres communications déjà établies, établies, pour optimiser l'utilisation de la bande passante des joncteurs.

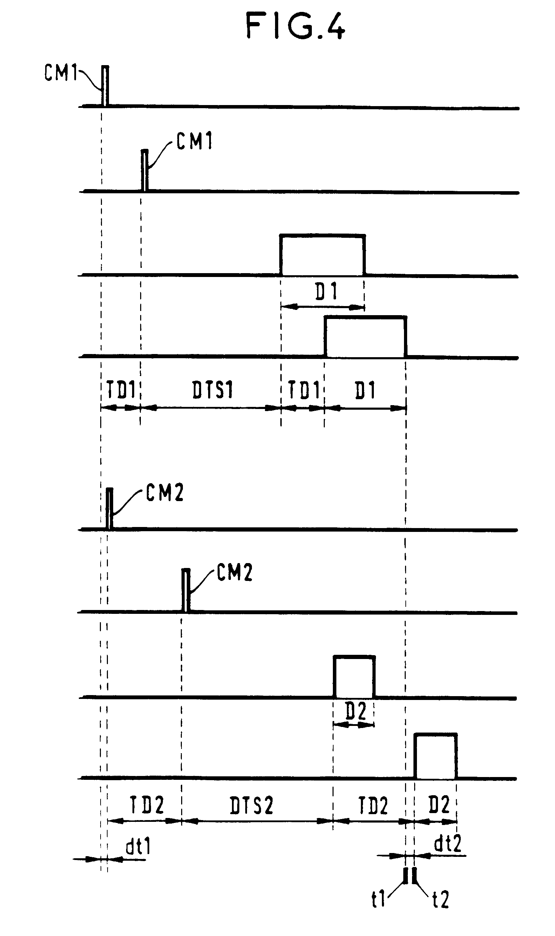

La figure 4 représente huit diagrammes temporels qui illustrent le multiplexage temporel des informations émises par deux installations d'abonné CPN1 et CPN2 qui ont établi deux communications indépendantes sur une même longueur d'onde et avec un même joncteur ETEi. Lors de l'établissement de ces deux communications, le joncteur de commande ETEc émet un message de commande CM1 destiné à l'installation d'abonnés CPN1 puis émet, après un intervalle de temps dt1, un message de commandes CM2 destiné à l'installation d'abonné CPN2. Ces messages sont représentés respectivement sur la première et la cinquième ligne de la figure 4. La deuxième et la sixième ligne de la figure 4 représentent respectivement la réception du message CM1 et du message CM2, par les installations d'abonné CPN1 et CPN2. La troisième et la septième ligne de la figure 4 représentent respectivement l'émission d'informations par les installations d'abonné CPN1 et CPN2. La quatrième et la huitième ligne de la figure 4 représentent respectivement la réception par le joncteur ETE des informations émises par les installations d'abonné CPN1 et CNP2.

Le message CM1 est reçu par l'installation d'abonné CPN1 après un temps de propagation TD1, alors que le message CM2 est reçu par l'installation d'abonné CPN2 après un temps de propagation TD2 qui est différent de TD1 parce que ces deux installations d'abonné sont situées à des distances différentes par rapport au central EX. Le message CM1 indique à l'installation d'abonné CPN1 qu'elle est autorisée à émettre après un délai d'attente DTS1, compté à partir de la réception du message CM1, et pour une durée D1. Le message CM2 indique à l'installation d'abonné CPN2 qu'elle est autorisée à émettre après un délai d'attente DTS2, compté à partir de la réception du message CM2, et pour une durée D2.

L'unité de commande CU du central EX connaît les temps de propagation TD1 et TD2 par une mesure préalable réalisée lors de la création des installations d'abonné CPN1 et CPN2, ou bien réalisée périodiquement au moyen d'un message de test. L'unité de commande CU calcule les délais DTS1 et DTS2 en fonction des temps de propagation TD1 et TD2 et en fonction de la durée dt1 de l'intervalle de temps séparant l'émission des messages CM1 et CM2. Par exemple, l'unité de commande CU constate tout d'abord que le temps de propagation TD1 est plus petit que le temps de propagation TD2 et décide donc de choisir une durée du délai d'attente DTS1 plus petite que la durée du délai d'attente DTS2. La durée du délai DTS1 est choisie quelconque, mais de valeur supérieure à la durée nécessaire à une installation d'abonné pour recevoir complètement le message CM1 et l'interpréter. La durée D1 est choisie en fonction de la bande passante nécessaire pour l'installation d'abonné CPN1. Dans cet exemple, elle est supposée deux fois plus importante que celle nécessaire à l'installation d'abonné CPN2, c'est pourquoi la durée D1 est deux fois plus longue que la durée d'émission D2.

L'unité de commande CU en déduit l'instant t1 où se termine la réception par le joncteur ETEi des informations émises par l'installation d'abonné CPN1. Elle additionne à l'instant t1 une valeur de durée dt2 qui constitue une marge de sécurité, pour obtenir l'instant t2 où devra commencer la réception par le joncteur ETEi des informations émises par l'installation d'abonné CPN2. L'unité de commande CU en déduit alors la valeur de la durée du délai d'attente DTS2, connaissant le temps de propagation TD2, et la durée dt1 de l'intervalle de temps séparant l'émission du message CM1 et l'émission du message CM2.

Il n'y a pas de synchronisation à proprement parler entre les horloges des différentes installations d'abonné et celles des joncteurs. Ces horloges sont seulement plésiochrones. Chaque installation d'abonné utilise comme référence l'instant de réception d'un message de commande pour commencer à mesurer la durée du délai d'attente qui lui est imparti.

Dans un autre mode de réalisation préférentielle, un message de synchronisation est émis périodiquement par ETEi vers tous les CPNJ. Chaque CPNj synchronise son horloge propre sur l'instant de réception du message de synchronisation. Les délais d'attente pour émettre, DTSj, sont comptés à partir de la réception du message de synchronisation. Dans cet autre mode de réalisation, les mêmes messages CM1 et CM2 sont conservés pour transporter les informations DTS1, D1, et TDS2, D2 respectivement, mais les instants d'émission sont déterminés à partir de la réception du message de synchronisation. Cette solution permet d'émettre les messages CM1 et CM2 sans se soucier de l'intervalle de temps dt1.

En prenant l'instant d'émission du message de synchronisation comme origine des temps, les données émises par une installation CPNj sont reçues dans ETEi entre les instants :

$$2TDj + DTSj$$

et

$$2TDj + DTSj + Dj$$

Le message de synchronisation peut également être utilisé à d'autres fonctions. Il peut comporter l'identifiant du joncteur ETEi et indiquer s'il est, ou non, joncteur de commande. Il peut commander à un CPNj particulier de répondre par un message prédéterminé, lui précisant DTSj. L'instant de réception de ce message dans ETEi permet de mesurer TDj.

Selon un premier mode de réalisation, il est nécessaire que le joncteur émette un message de commande CM pour chaque émission d'une installation d'abonné. Selon un autre mode de réalisation, un message de commande autorise une installation d'abonné à émettre périodiquement des informations, la période pouvant être indiquée aussi dans le message ou bien pouvant être fixée une fois pour un type d'installation d'abonné déterminé. Cette émission périodique peut être arrêtée par une décision de l'installation d'abonné ou bien par une décision de l'unité de commande du central, celle-ci envoyant un message de commande particulier vers l'installation d'abonné concernée, via le joncteur utilisé pour la communication en cours.

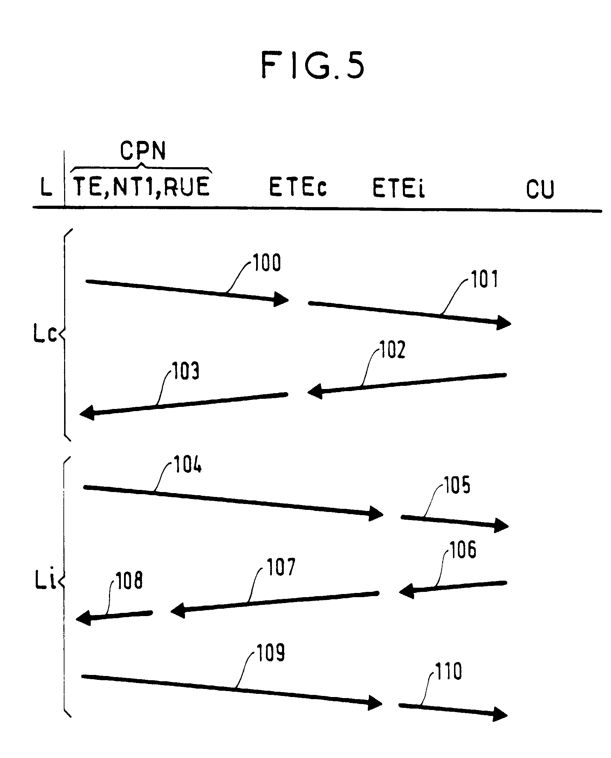

La figure 5 représente les échanges d'informations entre : une installation d'abonné CPN; un joncteur de commande ETEc; un joncteur ETEi qui sera en communication avec l'installation d'abonné CPN; et l'unité de commande CU du central. Le joncteur de commande ETEc est un joncteur identique aux autres, mais il est utilisé par les installations d'abonné comme interlocuteur pour l'établissement des communications. Chaque installation d'abonné comporte une table indiquant la relation entre les longueurs d'onde respectives et les identités respectives des différentes joncteurs du système de raccordement, notamment la longueur d'onde correspondant au joncteur de commande ETEc. Lorsqu'une installation d'abonné est inactive, son récepteur optique est accordé systématiquement sur la longueur d'onde du joncteur de commande. Deux cas sont alors possibles :

- L'installation d'abonné CPN demande l'établissement d'une communication : elle envoie un message au joncteur de commande ETEc sur la longueur d'onde propre à celui-ci, soit à la suite d'un message d'interrogation envoyé cycliquement par le joncteur de commande, soit dans un intervalle de temps réservé aux appels de cette installation d'abonné, conformément à l'un des deux procédés mentionnés précédemment. Le joncteur de commande ETEc reçoit ce message et le transmet à l'unité de commande CU du central. L'unité de commande CU envoie, par l'intermédiaire du joncteur de commande ETEc, un message à l'installation d'abonné CPN. Ce message contient l'identité d'un joncteur disponible ETEi, l'unité de commande CU connaissant l'état de chacun des joncteurs grâce à sa liaison par la liaison B. L'installation d'abonné CPN règle alors son émetteur optique et son récepteur optique sur la longueur d'onde du joncteur ETEi qui lui est affecté.

- L'établissement d'une communication est demandée par un abonné du réseau, qui veut établir une communication avec l'une des installations d'abonné desservie par le système de raccordement optique. Si l'installation d'abonné n'est pas déjà en communication l'unité de commande CU commande le joncteur de commande ETEc pour qu'il envoie à l'installation d'abonné demandée CPN l'identité d'un joncteur disponible ETEi. L'installation d'abonné reçoit ce message et règle son émetteur optique et son récepteur optique sur la longueur d'onde correspondant au joncteur ETEi qui lui est affecté. Si l'installation d'abonné CPN est déjà en communication avec un autre joncteur, l'unité de commande CU utilise cet autre joncteur pour dialoguer avec l'installation d'abonné.

Les communications peuvent être de trois types : diffusion d'un joncteur vers plusieurs installations d'abonné, sans transmission en sens inverse; diffusion d'un joncteur vers plusieurs installations d'abonné, avec transmission en sens inverse; ou transmission point à point, d'un joncteur à une seule installation d'abonné et réciproquement.

Le système de raccordement est particulièrement bien adapté aux communications du type diffusion puisque tout signal optique transmis par un joncteur est systématiquement acheminé vers toutes les installations d'abonné qui sont reliées au même réseau de diffusion. Il suffit que les récepteurs optiques des installations d'abonné concernées par cette diffusion soient accordés sur la longueur d'onde du joncteur chargé de la diffusion de cette communication. Par contre, ce type de système de raccordement nécessite de chiffrer les communications de point à point pour éviter qu'une installation d'abonné puisse prendre connaissance du contenu des communications qui ne lui sont pas destinées. Quel que soit le type de communication, les informations échangées entre les installations d'abonné et les joncteurs sont mises sous la forme de cellules selon un format normalisé pour le mode de transfert asynchrone.

Ce format comporte un champ appelé identificateur de circuit virtuel et un champ appelé identificateur de faisceau virtuel, qui permettent d'identifier chaque communication. L'équipement ETEN du joncteur ETEi attribue une valeur à ces champs pour chacune des communications, et l'équipement d'usager éloigné RUE de l'installation d'abonné CPN reconnaît cette valeur pour chaque communication.

Le chiffrement peut être réalisé selon le procédé suivant : une loi de codage est choisie par l'équipement d'usager local LUE de l'installation d'abonné CPN, puis est transmise sous une forme protégée, à l'équipement d'usager local LUE du joncteur ETEi affecté à cette communication. Le codage et le décodage sont donc ainsi réalisés selon une même loi, dans le joncteur et l'installation d'abonné qui sont en communication.

Un autre procédé de chiffrement peut consister à attribuer une loi de chiffrement fixée pour chaque installation d'abonné, et à indiquer à chacun des joncteurs du système de raccordement les lois de chiffrement de chacune des installations d'abonné du système. Ce procédé simplifie les échanges de messages de signalisation entre l'installation d'abonné et le joncteur, mais nécessite d'initialiser chaque installation d'abonné avec une loi de chiffrement prédéterminée.

Considérons les principaux messages qui sont émis par l'équipement d'usager local LUE d'un joncteur, vers l'équipement d'usager éloigné RUE d'une ou de plusieurs installations d'abonné CPN :

- un message, déjà mentionné précédemment, est utilisé par le joncteur de commande ETEC, pour indiquer à chacune de ces installations d'abonné l'instant et la durée de l'intervalle de temps où elle est autorisée à émettre des informations;

- un message est émis par chacun des joncteurs, périodiquement ou pseudo-périodiquement, pour indiquer l'identité du joncteur, afin de maintenir à jour dans le bloc fonctionnel RUE de chaque installation d'abonné CPN, une table indiquant la relation entre chacune des longueurs d'onde que peut recevoir effectivement l'installation d'abonné et les identités des joncteurs qui sont effectivement accessibles à cette installation d'abonné;

- un message émis par le joncteur, le joncteur de commande ETEc par exemple, pour commander à une installation d'abonné d'abandonner la longueur d'onde sur laquelle elle est accordée, puis de s'accorder sur une autre longueur d'onde indiquée par le message.

Certains de ces messages sont transmis en clair et peuvent être reçus et traités par tous les équipements d'usagers lointains RUE de toutes les installations d'abonné.

Considérons les messages transmis d'une installation d'abonné CPN àun joncteur. Ces messages sont généralement des messages de signalisation classique engendrés par un terminal T1, mais il y a au moins deux messages particuliers qui sont engendrés par l'équipement d'usager éloigné RUE :

- un message pour indiquer la loi de chiffrement qui va être utilisée, lors de l'établissement d'une communication; ce message étant envoyée au joncteur ETEi utilisé pour une communication, après que le joncteur de commande ETEc ait commandé à l'installation d'abonné de s'accorder sur une longueur d'onde correspondant à un joncteur ETEi autre que le joncteur de commande ETEcc;

- un message émis à destination du joncteur de commande ETEc pour indiquer que l'installation d'abonné souhaite accéder à un service de diffusion dont l'identité est précisée dans le contenu du message.

La figure 5 représente l'établissement d'une communication de point à point seulement, ou de point à point combinée avec une diffusion. L'établissement de cette communication commence par un message de demande 100 émis par le terminal TE et retransmis au joncteur de commande ETEc par l'équipement d'usager éloigné RUE, sur la longueur d'onde Lc du joncteur de communication. Ce dernier retransmet le message, au cours de l'étape noté 101, à l'unité de commande CU du central EX. Cette dernière répond au joncteur de commande ETEc, au cours de l'étape notée 102, par un message fournissant : l'identité d'un autre joncteur ETEi, choisi parmi les joncteurs disponibles à l'instant considéré; le délai d'attente DTS qui définit l'instant où l'émission est autorisée; et la durée D pendant laquelle l'émission est autorisée. Au cours de l'étape 103 le joncteur de commande ETEc retransmet le message à l'installation d'abonné. Cette dernière accorde son récepteur optique et son émetteur optique sur la longueur d'onde Li correspondant à l'identité du joncteur ETEi.

Ces informations sont mémorisées dans l'équipement d'usager éloigné RUE, et le reste du message est transmis au terminal TE. Au cours de l'étape 104, le terminal TE répond par un message d'accusé de réception. L'équipement d'usager RUE ajoute à ce message d'accusé de réception une indication définissant la loi de chiffrement qui sera utilisée pour cette communication de point à point. Le message est reçu par le joncteur ETEi puis est retransmis à l'unité de commande CU au cours de l'étape 105. Au cours de l'étape 106, l'unité de commande CU autorise le joncteur ETEi à établir la communication, en réalisant le chiffrement défini par cette loi. Au cours de l'étape 107, le joncteur ETEi envoie des informations chiffrées à l'installation d'abonné CPN. L'équipement d'usager éloigné RUE réalise le déchiffrement de ces informations et les retransmet, au cours de l'étape 108, au terminal TE. L'installation d'abonné CPN reconnaît que le message lui est destiné en reconnaissant la valeur des champs identificateur de circuit virtuel et identificateur de faisceau virtuel, car celle-ci appartient à certaines valeurs mémorisées dans des tables que comporte le terminal TE.

Au cours de l'étape 109, le terminal TE émet des informations vers l'abonné destinataire, et des informations de signalisation. Les informations de signalisation sont transmises, au cours de l'étape 110, à l'unité de commande CU, par le joncteur ETEi. Les informations destinées à l'abonné destinataire dans le réseau de télécommunication sont transmises à cet abonné par le réseau de connexion CN.

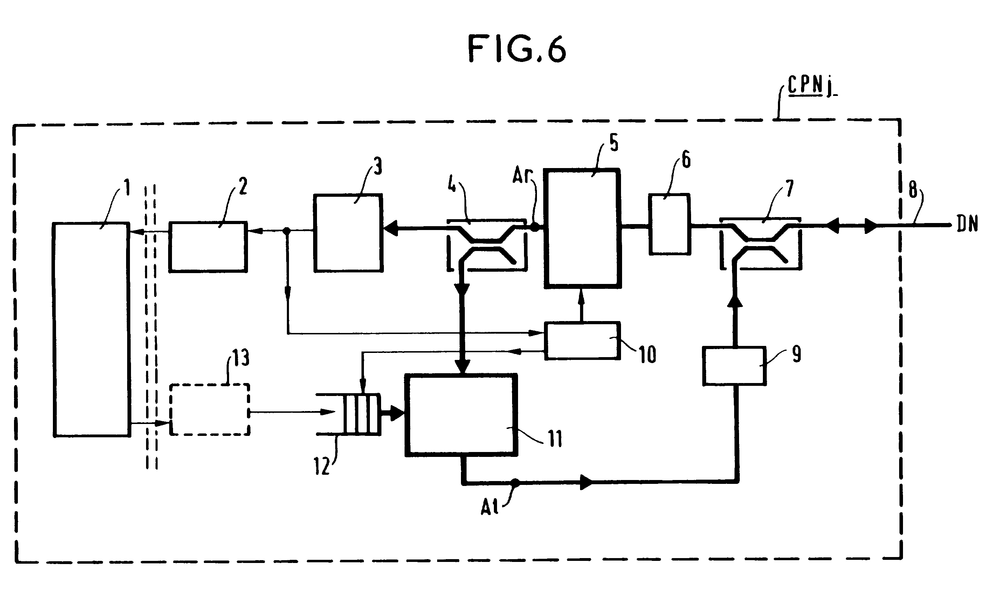

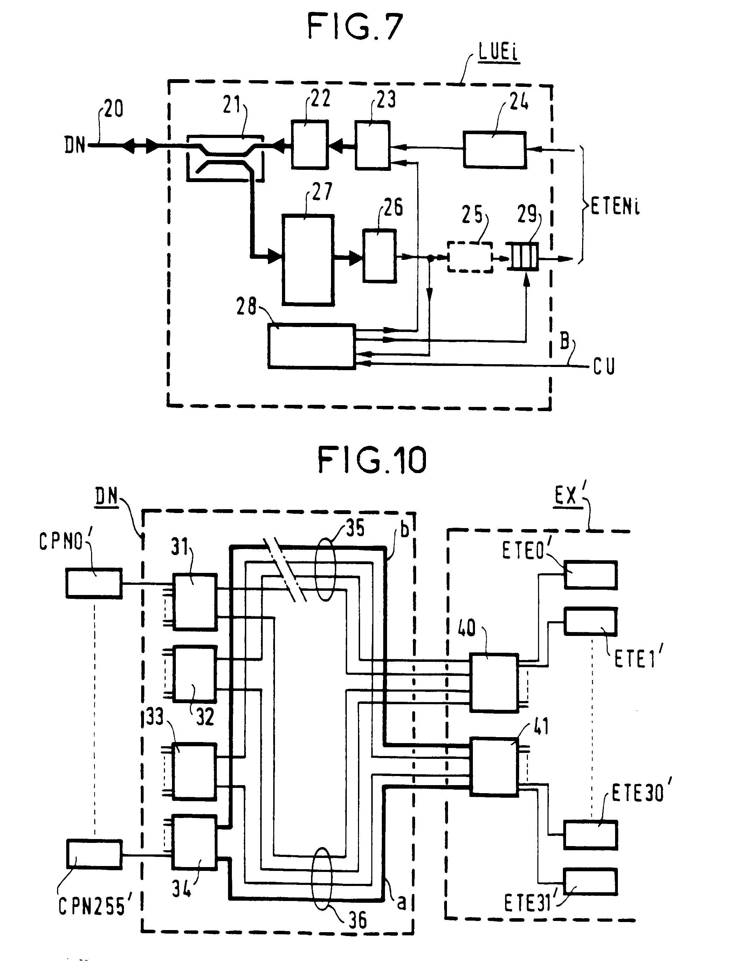

Les figures 6 et 7 représentent respectivement les schémas synoptique d'un exemple de réalisation d'une partie de l'installation d'abonné CPNj et d'un exemple de réalisation de l'équipement d'usager éloigné, LUEi, d'un joncteur ETEi, permettant une communication dans les deux sens sur une seule fibre optique et ne nécessitant qu'un seul laser accordable. Ce laser accordable est situé dans le joncteur ETEi et il fournit une onde porteuse pour les deux sens de transmission. L'installation d'abonné CPNj comporte :

- un terminal 1, par exemple un poste téléphonique; les équipements intermédiaires entre ce terminal 1 et les autres équipements listés ci-après n'étant pas représentés;
- un dispositif 2 de déchiffrement des informations destinées au terminal 1 (dispositif optionnel);
- un dispositif 13 de chiffrement des informations issues du terminal 1;
- un photodétecteur 3, par exemple une photodiode à avalanche;
- deux coupleurs 4 et 7;
- deux isolateurs optiques 6 et 9;
- un filtre optique 5 accordable par un signal électrique appliqué à une entrée de commande;
- un circuit de commande 10;
- un amplificateur optique 11 dont le gain est commandable par un signal électrique appliqué à une entrée de commande;
- et une mémoire tampon électronique 12.

L'installation d'abonné CPNj est relié au réseau de distribution DN par une fibre optique unique 8, utilisée pour les deux sens de transmission. Le signal optique arrivant par la fibre 8 traverse successivement le coupleur 7, l'isolateur 6, le filtre 5, et le coupleur 4, puis est convertie en signal électrique par le photodétecteur 3. Une partie de ce signal optique est prélevée par le coupleur 4 et est amplifiée par l'amplificateur 11, puis traverse l'isolateur 9, et est réinjectée dans la fibre 8 par le coupleur 7, pour être acheminée en direction du central. Le photodétecteur 3 possède une sortie électrique reliée à une entrée du circuit 2 de déchiffrement et à une entrée du circuit de commande 10. Le circuit de chiffrement 13 possède une sortie reliée à une entrée de la mémoire tampon 12. Une entrée de commande de la mémoire tampon 12 est reliée à une sortie du circuit de commande 10. L'entrée de commande de l'amplificateur optique 11 est reliée à une sortie de la mémoire tampon 12. L'entrée de commande du filtre 5 est reliée à une sortie du circuit de commande 10.

Les informations de signalisation n'étant pas chiffrées, elles sont prélevées à la sortie du photodétecteur 3 pour être fournies au circuit de commande 10. Par contre, les autres informations sont chiffrées et nécessitent un déchiffrement dans le dispositif 2. Les informations émises par le terminal 1 peuvent éventuellement être chiffrées par le dispositif de chiffrement 13 puis sont stockées dans la mémoire tampon 12 en attendant l'instant où l'émission de ces informations est autorisée. Le circuit de commande 10 gère l'écriture et la lecture de ces informations dans la mémoire tampon 12. Les informations lues dans la mémoire tampon 12 sont utilisées pour moduler le gain de l'amplificateur 11 de manière binaire. L'amplificateur 11 module l'amplitude de la fraction de signal optique dérivée par le coupleur 4, ce qui évite l'utilisation d'un laser accordable dans chaque installation d'abonné.

Le circuit de commande 10 a aussi pour fonction de régler la longueur d'onde d'accord du filtre 5. Au moment de la création de l'installation d'abonné CPNi, et ensuite périodiquement pendant qu'elle est inactive :

- il règle la longueur d'onde du filtre 5 successivement sur chacune des trente deux longueurs d'onde possibles pour les joncteurs;
- il attend, pour chaque longueur d'onde, pendant un délai prédéterminé, la réception d'un message d'identification;
- s'il reçoit un message d'identification pendant ce délai, il mémorise dans une mémoire l'identité de joncteur contenue dans le message d'identification, avec un bit de drapeau indiquant s'il s'agit ou non d'un joncteur de commande;
- s'il ne reçoit pas de message d'identification il mémorise dans cette mémoire un mot binaire indiquant qu'aucun joncteur ne fonctionne sur cette longueur d'onde;
- quand le balayage des trente deux longueurs d'onde est terminé, il cherche dans la mémoire la longueur d'onde d'un joncteur de commande puis règle le filtre 5 sur cette longueur d'onde, où il restera en veille pendant un délai prédéterminé au bout duquel il recommencera ce balayage des trende deux longueurs d'onde.

Lorsqu'une communication est en cours d'établissement, à la demande d'un abonné du réseau, le circuit de commande 10 reçoit, sur la longueur d'onde du joncteur de commande, un message lui donnant l'identité d'un joncteur auquel cette communication est affectée. Il règle alors le filtre 5 sur cette longueur et il accuse réception, comme cela a été décrit en se référant à la figure 6.

Chaque joncteur inactif émet en permanence des cellules. Lorsqu'il n'a pas d'informations à transmettre il émet des cellules vides ayant un format prédéterminé. Le circuit de commande 10 comporte une horloge qui est asservie selon un procédé connu, sur le rythme de réception des cellules, vides ou non, qu'il reçoit. La présence de ces cellules vides sur une longueur d'onde permet en outre aux installations d'abonné de savoir qu'un joncteur peut être actif sur cette longueur d'onde. Par ailleurs, le circuit de commande 10 comporte un dispositif d'asservissement de type connu, pour asservir en permanence le réglage du filtre sur la longueur d'onde des cellules reçues.

La figure 7 représente le schéma synoptique d'un exemple de réalisation de l'équipement d'usager local LUEi d'un joncteur ETEi, qui comprend :

- un coupleur 21;

- un isolateur optique 22;

- un laser 23 accordé sur une longueur d'onde fixée et différente pour chaque joncteur ETE;

- un dispositif de chiffrement 24;

- un dispositif de déchiffrement 25 (optionnel);

- un photodétecteur 26, par exemple une photodiode à avalanche;

- un filtre optique 27, accordé sur une longueur d'onde fixée et différente pour chaque joncteur ETE;

- un circuit de commande 28, relié par la liaison B à l'unité de commande CU du central;

- une mémoire tampon 29.

Le joncteur ETEi est relié au réseau de distribution DN par une fibre optique unique 20, utilisée pour les deux sens de transmission. Cette fibre optique 20 est reliée à un accès du coupleur 21. Deux autres accès du coupleur 21 sont reliés respectivement à une sortie de l'isolateur optique 22 et à une entrée du filtre 27. Le coupleur 21 transmet à la fibre 20 un signal optique fourni par l'isolateur 22 et qui est destiné au réseau de distribution DN. Par contre, le coupleur 21 prélève un signal optique provenant du réseau de distribution DN et l'applique à l'entrée du filtre 27. Le filtre 27 possède une sortie reliée à une entrée du photodétecteur 26.

Une sortie électrique du photodétecteur 26 est reliée à une entrée du circuit de commande 28 et à une entrée du circuit de déchiffrement 25. Une sortie du circuit 25 est reliée à une entrée de la mémoire tampon 29. Une sortie de la mémoire tampon 29 est reliée à une entrée du réseau de connexion CN à travers l'équipement ETENi. Une entrée de commande de la mémoire tampon 29 est reliée à une sortie du circuit de commande 28.

Une sortie du réseau de connexion CN est reliée, à travers l'équipement ETENi, à une entrée du circuit de chiffrement 24. Une sortie du circuit 24 est reliée à une entrée de commande d'amplitude du laser 23. Une sortie du circuit de commande 28 est reliée à une autre entrée de commande d'amplitude du laser 23.

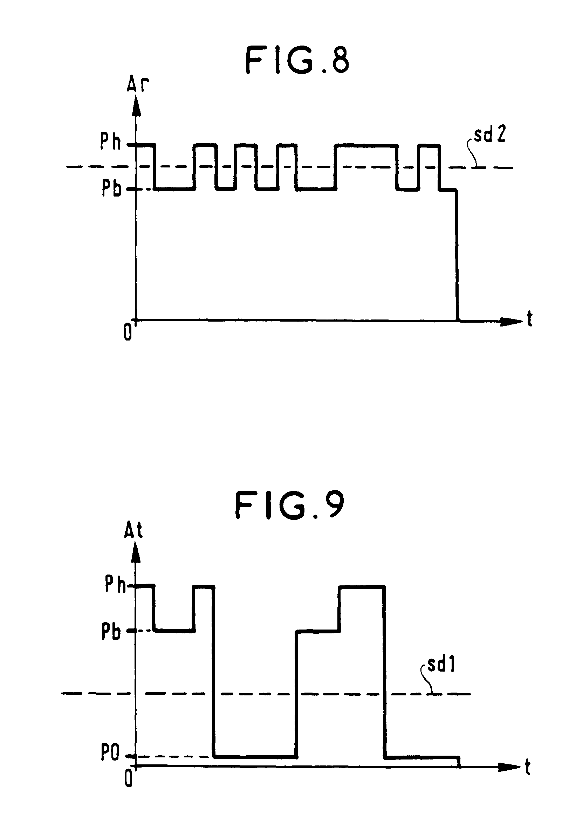

Les figures 8 et 9 illustrent le fonctionnement de l'installation d'abonné CPNi et du joncteur ETEj lorsqu'ils sont en communication. La figure 8 représente l'amplitude Ar, en fonction du temps t, du signal optique à la sortie du filtre 5, c'est-à-dire le signal optique se propageant du joncteur vers l'installation d'abonné. La figure 9 représente l'amplitude At, en fonction du temps t, du signal optique à la sortie de l'amplificateur 11 qui est utilisé comme modulateur, c'est-à-dire l'amplitude du signal optique se propageant de l'installation d'abonné vers le joncteur. Ces références Ar et At sont également portées sur la figure 6 pour indiquer les endroits où ces amplitudes se manifestent.

L'amplitude Ar varie entre un niveau haut, Ph, et un niveau bas Pb qui est nettement supérieur à 0, de façon à fournir à l'installation d'abonné un signal optique ayant une énergie suffisante pour permettre la transmission d'un signal en retour. La détection des valeurs logiques est réalisée, en sortie du photodétecteur 3, par comparaison de l'amplitude du signal électrique fourni par le photodétecteur 3 avec une valeur de seuil Sd2 égale à la demi-somme des valeurs Ph et Pb.

L'amplificateur 11 module l'amplitude du signal fourni par le coupleur 4 et qui est constitué par une fraction fixe, par exemple la moitié, du signal appliqué à l'entrée du coupleur 4 et dont le graphe est représenté sur la figure 8. L'amplificateur 11 module ce signal entre une valeur minimale P0 qui est presque nulle et une valeur maximale qui est égale à l'amplitude Pb ou Ph, selon le signal fourni à l'amplificateur 11 l'instant considéré. Dans le joncteur ETEj, le coupleur 21 extrait ce signal et l'applique au photodétecteur 26. La détection d'un niveau logique à la sortie du détecteur 26 est réalisée en comparant l'amplitude du signal électrique fourni par le détecteur 26 à une valeur de seuil sd1 égale à la demi-somme des valeurs à P0 et Pb.

Le débit dans les deux sens de transmission n'est pas forcément identique. Il peut être, par exemple, de 600 mégabits par seconde dans le sens de transmission du joncteur vers l'installation d'abonné; et de 150 mégabits par seconde dans le sens de transmission de l'installation d'abonné vers le joncteur.

Dans l'installation d'abonné CPNi, la mémoire tampon 12 permet de stocker les informations à transmettre en attendant l'instant où elles seront autorisées à être transmises. Ces informations sont fournies à un rythme constant par le terminal 1, sous la forme de cellules au format normalisé pour le mode de transfert asynchrone. Dans le joncteur ETEj, la mémoire tampon 29 a pour fonction de régulariser le débit de ces informations avant de les retransmettre au réseau de connexion CN, car chaque entrée d'un réseau de connexion à mode de transfert asynchrone est prévue pour un certain débit maximal. Ce débit maximal ne doit pas être dépassé. D'autre part, le taux de perte de cellules dans ce réseau de connexion est d'autant plus faible que les débits appliqué aux entrées de ce réseau sont réguliers.

Le circuit de commande 28 comporte, par exemple, des commutateurs, permettant d'attribuer un numéro d'identité au joncteur. Il comporte en outre un processeur muni d'un programme, pour :

- Emettre au moyen du laser 23, cycliquement, un message d'identification du joncteur. Ce message contient le numéro d'identité du joncteur et un bit indiquant s'il est ou non un joncteur de commande.

- Emettre les messages mentionnés précédemment, pour remplir la fonction de joncteur de commande ou la fonction de joncteur de communication, selon le cas.

La figure 10 représente le schéma synoptique d'un exemple de réalisation préférentiel du réseau de distribution DN, pour relier un central EX' à des installations d'abonné CPN0' à CPN255'. Cet exemple de réalisation présente l'avantage d'assurer le maintien du service même si une défaillance du réseau de distribution interrompt la moitié des voies de transmission dans ce réseau de distribution DN.

Le central EX' comporte par exemple 32 joncteurs ETE0', ..., ETE31', et deux coupleurs optiques 40 et 41' ayant chacun : seize accès reliés respectivement à 16 sorties des joncteurs ETE0', ... , ETE31', et quatre accès reliés respectivement à quatre fibres optiques du réseau de distribution DN. Quatre fibres dont deux reliées au coupleur 40 et deux reliées au coupleur 41 constituent un câble 35, alors que les quatre autres fibres reliées à ces coupleurs constituent un câble 36 circulant par un chemin différent de celui du câble 35. Si l'un des deux câbles est endommagé accidentellement, l'autre câble n'est pas affecté.

A proximité des installations d'abonné CPN1', ..., CPN255', le réseau de distribution DN comporte en outre quatre coupleurs optiques 31 à 34 comportant chacun deux accès reliés à deux fibres du réseau de distribution DN, et 64 accès reliés respectivement à 64 installations d'abonné CPN1', ... , CNP255'. Par exemple, le coupleur 34 comporte deux accès reliés respectivement à deux accès du coupleur 41 par deux fibres, a et b, appartenant respectivement au câble 36 et au câble 35. En cas de rupture du câble 35, le coupleur 34 reste relié au coupleur 41 par la fibre, a du câble 36. Par conséquent les 64 installations d'abonné qui sont reliées au coupleur 34 conservent l'accès à seize des joncteurs ET0', ... , ETE31', ce qui permet d'assurer encore une grande partie du service. Si le joncteur de commande n'est plus accessible par certains abonnés, il est possible d'attribuer la fonction de joncteur de commande à un second joncteur.

De nombreuses variantes de cet exemple de réalisation sont à la portée de l'homme de l'art, tout en conservant le principe de transmission par deux câbles indépendants 35 et 36, vers un même coupleur. Le nombre de coupleurs optiques utilisés, et le nombre d'accès que comporte chacun de ces coupleurs optiques, sont choisis en fonction de considérations énergétiques : ils dépendent de la sensibilité des récepteurs optiques, de la puissance des émetteurs optiques, et de la présence ou de l'absence d'amplificateur optique dans le réseau de distribution DN.

L'invention n'est pas limitée aux exemples de réalisation représentés sur les figures 5 et 6 pour une installation d'abonné et pour un joncteur. Tout système de transmission bidirectionnel sur une même longueur d'onde et une même fibre optique peut être adapté pour mettre en oeuvre l'invention. En particulier, des modulations autres que la modulation d'amplitude peuvent être utilisées.

Les joncteurs ont chacun une longueur d'onde fixée, mais ils peuvent comporter un émetteur optique accordable, afin de rendre les joncteurs facilement interchangeables. L'émetteur optique est alors accordé sur une longueur fixée, au moment de l'installation du système.

## Revendications

1. Système optique configurable automatiquement, comportant :

    - des installations d'abonné (CNP0,..., CNP255), chaque installation d'abonné (CNP0,..., CNP255) comportant un émetteur optique (11) et un récepteur optique (3, 5) accordés sur une même longueur d'onde réglable ;
    - un centre de commutation (EX) appartenant à un réseau de télécommunication;
    - un réseau de distribution optique (DN) raccordant les installations d'abonné (CNP0,..., CNP255) au centre de commutation (EX) ;

        le centre de commutation (EX) comportant :

    -- un réseau de connexion (CN) ;
    -- des joncteurs (ETE0,..., ETE31) ; chaque joncteur comportant un émetteur optique (23) et un récepteur optique (26) accordé sur une même longueur d'onde, différente pour chaque joncteur ; et
    -- des moyens de commande (CU) du réseau connexion(CN), adaptés à attribuer la fonction de joncteur de commande à au moins un des joncteurs, et étant adaptés à affecter une longueur d'onde différente à chacune des installations d'abonné qui sont en cours de communication à un même instant, cette longueur d'onde correspondant à un joncteur disponible et qui n'est pas un joncteur de commande ;

le réseau de distribution optique (DN) reliant tous les émetteurs optiques des joncteurs à tous les récepteurs optiques des installations d'abonné, et reliant les émetteurs optiques de toutes les installations d'abonné à tous les récepteurs optiques des joncteurs ; chaque installation d'abonnée (CNP0,..., CNP255) comportant des moyens (10) pour régler la longueur d'onde de son récepteur optique, qui sont adaptés pour régler cette longueur d'onde sur la longueur d'onde d'un joncteur de commande (ETEO), lorsque cette installation d'abonné est en veille ;
**caractérisé** en ce que :

- chaque joncteur (ETE0,..., ETE31) comporte des moyens pour attribuer à ce joncteur une identité, et des moyens (28) pour commander l'émetteur optique (23) de ce joncteur pour qu'il émette cycliquement un message d'identification contenant l'identité de ce joncteur et indiquant si la fonction de joncteur de commande lui est attribuée ou non ;
- dans chaque installation d'abonné (CNP0,..., CNP255), les moyens (10) pour régler la longueur d'onde de son récepteur optique sont adaptés en outre, lorsque cette installation d'abonné détermine la configuration du système :

-- à régler la longueur d'onde de ce récepteur (3,5) successivement sur chacune des longueurs d'onde possibles pour les joncteurs ;
-- à attendre sur chaque longueur d'onde, pendant un délai prédéterminé, la réception d'un message d'identification ;
-- à mémoriser l'identité de joncteur correspondant à chaque longueur d'onde sur laquelle l'installation d'abonné a reçu un message d'identification;
-- à repérer l'identité de chaque joncteur de commande (ETE0,..., ETE31), parmi les identités mémorisées ;
-- et à régler ensuite la longueur d'onde de ce récepteur (3,5) sur la longueur d'onde d'un joncteur de commande.

2. Système selon la revendication 1, caractérisé en ce que les moyens de commande (CU) du centre de commutation (EX) sont adaptés :

- à attribuer la fonction de joncteur de commande à l'un au moins des joncteurs (ETE0,..., ETE31) ayant un fonctionnement correct;
- à surveiller le fonctionnement de chaque joncteur (ETE0,..., ETE31) ;
- et à attribuer la fonction de joncteur de commande à un joncteur différent ayant un fonctionnement correct, si le précédent à une défaillance.

3. Système selon la revendication 1, caractérisé en ce que le centre de commutation comporte au moins un premier étage de coupleurs optiques (40, 41) reliés d'une part aux joncteurs (ETE0,..., ETE31), et d'autre part au réseau de diffusion optique (DN);
et en ce que le réseau de distribution optique (DN) comporte :

- au moins un second étage de coupleurs optiques (31,..., 34) reliés d'une part au premier étage de coupleurs optiques (40, 41), et reliés d'autre part aux installations d'abonné (CNP0', ... , CPN255');
- et des fibres optiques (35, 36) reliant les coupleurs du premier étage aux coupleurs du second étage; chaque coupleur (34) du second étage étant relié à au moins un coupleur (41) du premier étage par au moins deux fibres optiques (35b, 36a), en passant par des chemins différents, de telle sorte que la défaillance d'une de ces fibres optiques n'empêche aucune installation d'abonné d'être reliée à au moins un joncteur.

**Patentansprüche**

1. Automatisch konfigurierbares optisches System, das umfaßt:

- Teilnehmereinrichtungen (CNP0, ..., CNP255), wobei jede Teilnehmereinrichtung (CNP0, ..., CNP255) einen optischen Sender (11) und einen optischen Empfänger (3,5) umfaßt, die auf eine gleiche, regelbare Wellenlänge abgestimmt sind;
- eine Vermittlungszentrale (EX), die zu einem Telekommunikationsnetz gehört;
- ein optisches Verteilungsnetz (DN), das die Teilnehmereinrichtungen (CNP0, ..., CNP255) mit der Vermittlungszentrale (EX) verbindet;

wobei die Vermittlungszentrale (EX) umfaßt:

- ein Verbindungsnetz (CN);
- Verbinder (ETE0, ..., ETE31); wobei jeder Verbinder einen optischen Sender (23) und einen optischen Empfänger (26) umfaßt, die auf eine gleiche Wellenlänge, die für jeden Verbinder verschieden ist, abgestimmt sind; und

- Steuermittel (CU) des Verbindungsnetzes (CN), die dazu geeignet sind, die Funktion des Steuerverbinders wenigstens einem der Verbinder zuzuweisen, und die dazu geeignet sind, einer jeden der Teilnehmereinrichtungen, die zu einem gleichen Zeitpunkt in Kommunikation stehen, eine unterschiedliche Wellenlänge zuzuweisen, wobei diese Wellenlänge einem verfügbaren Verbinder entspricht, der kein Steuerverbinder ist;

wobei das optische Verteilungsnetz (DN) alle optischen Sender der Verbinder mit allen optischen Empfängern der Teilnehmereinrichtungen verbindet und die optischen Sender aller Teilnehmereinrichtungen mit allen optischen Empfängern der Verbinder verbindet; wobei jede Teilnehmereinrichtung (CNP0,...CNP255) Mittel (10) umfaßt, um die Wellenlänge ihres optischen Empfängers zu regeln, die dazu geeignet sind, diese Wellenlänge auf die Wellenlänge des Steuerverbinders (ETE0) zu regeln, wenn diese Teilnehmereinrichtung in Bereitschaft ist; dadurch gekennzeichnet, daß:

- jeder Verbinder (ETE0,...,ETE31) Mittel zum Zuordnen einer Identität zu jedem Verbinder und Mittel (28) umfaßt zum Steuern des optischen Senders (23) dieses Verbinders, so daß er zyklisch eine Identifikationsnachricht sendet, die die Identität dieses Verbinders enthält, und anzeigt, ob ihm die Funktion des Steuerverbinders zugeordnet ist oder nicht;
- in jeder Teilnehmereinrichtung (CNP0,... CNP255) die Mittel (10) zum Regeln der Wellenlänge ihres optischen Empfängers ferner angepaßt sind um, wenn die Teilnehmereinrichtung die Konfiguration des Systems bestimmt,

 - - die Wellenlänge dieses Empfängers (3,5) nacheinander auf jede für die Verbinder mögliche Wellenlänge zu regeln;
 - - bei jeder Wellenlänge während einer vorbestimmten Wartezeit auf den Empfang einer Identifikationsnachricht zu warten;
 - - entsprechend jeder Wellenlänge, auf der die Teilnehmereinrichtung eine Identifikationsnachricht empfangen hat, die Identität des Verbinders zu speichern;
 - - die Identität von jedem Steuerverbinder (ETE0, ... ETE31) unter den gespeicherten Identitäten aufzufinden;
 - - und dann die Wellenlänge dieses Empfängers (3,5) auf die Wellenlänge eines Steuerverbinders zu regeln.

2. System nach Anspruch 1, dadurch gekennzeichnet, daß die Steuermittel (CU) der Vermittlungszentrale (EX) angepaßt sind, um

- die Funktion des Steuerverbinders wenigstens einem der Verbinder (ETE0, ..., ETE31) zuzuordnen, der korrekt funktioniert;
- das Funktionieren jedes Verbinders (ETE0, ..., ETE31) zu überwachen; und
- die Funktion des Steuerverbinders einem anderen Verbinder, der korrekt funktioniert, zuzuordnen, wenn der vorhergehende eine Störung hat.

3. System nach Anspruch 1, dadurch gekennzeichnet, daß die Vermittlungszentrale wenigstens eine erste Stufe von optischen Kopplern (40, 41) umfaßt, die einerseits mit den Verbindern (ETE0, ..., ETE31) und andererseits mit dem optischen Verbreitungsnetz (DN) verbunden sind;
und daß das Verteilungsnetz (DN) umfaßt:

- wenigstens eine zweite Stufe von optischen Kopplern (31, ..., 34) die einerseits mit der ersten Stufe von optischen Kopplern(40, 41) und andererseits mit den Teilnehmereinrichtungen (CNP0' ..., CNP255') verbunden sind;
- und optische Fasern (35, 36), die die Koppler der ersten Stufe mit den Kopplern der zweiten Stufe verbinden, wobei jeder Koppler (34) der zweiten Stufe mit wenigstens einem Koppler (41) der ersten Stufe durch wenigstens zwei optische Fasern (35b, 36a) über verschiedene Wege verbunden ist, so daß das Versagen einer dieser Fasern keine Teilnehmereinrichtung daran hindert, mit wenigstens einem Verbinder verbunden zu werden.

## Claims

1. Automatically configurable optical connection system including:

- customer premises networks (CPN0, ..., CPN255), each customer premises network (CPN0, ..., CPN255) including an optical sender (11) and an optical receiver (3, 5) tuned to the same variable wavelength;
- a switching centre (EX) which is part of a telecommunication network;
- an optical distribution network (DN) connecting the customer premises networks (CPN0, ..., CPN255) to the switching centre (EX);

 the switching centre (EX) including:

 -- a connection network (CN);
 -- exchange termination equipments (ETE0,..., ETE31), each exchange termination equipment including an optical sender (23) and an optical receiver (26) tuned to the same wavelength, which is different for each exchange termination equipment, and

-- a control unit (CU) of the connection network (CN) adapted to assign the control exchange termination equipment function to at least one of the exchange termination equipments and to assign a different wavelength to each customer premises network communicating at the same time, this wavelength corresponding to an available exchange termination equipment that is not a control exchange termination equipment;

the optical distribution network (DN) connecting all exchange termination equipment optical senders to all customer premises network optical receivers and connecting all customer premises network optical senders to all exchange termination equipment optical receivers; each customer premises network (CPN0, ..., CPN255) including means (10) for adjusting the wavelength of its optical receiver and adapted to adjust this wavelength to the wavelength of a control exchange termination equipment (ETE0) when the customer premises network is inactive;
characterised in that:

- each exchange termination equipment (ETE0, ..., ETE31) comprises means for assigning an identity to said exchange termination equipment and means (28) for commanding the optical sender (23) of said exchange termination equipment to send cyclically an identification message containing the identity of said exchange termination equipment and indicating if the control exchange termination equipment function is assigned to it or not,
- in each customer premises network (CPN0, ..., CPN255) the means (10) for adjusting the wavelength of its optical receiver comprise means for, when said customer premises network determines the configuration of the system:

  -- tuning this receiver (3, 5) successively to each of the wavelengths available to the exchange termination equipments,
  -- waiting at each wavelength for a predetermined time to receive an identification message,
  -- memorising the exchange termination equipment identity for each wavelength on which the customer premises network has received an identification message,
  -- marking the identity of each control exchange termination equipment (ETE0, ...,

ETE31) among the memorised identities, and

- then tuning this receiver (3, 5) to the wavelength of a control exchange termination equipment.

2. System according to claim 1 characterised in that the control unit (CU) of the switching centre (EX) are adapted to:

- assign the control exchange termination equipment function to at least one of the exchange termination equipments (ETE0, ..., ETE31) that is operating correctly,
- monitoring the operation of each exchange termination equipment (ETE0, ..., ETE31), and
- assigning the control exchange termination equipment function to a different exchange termination equipment that is operating correctly if the previous control exchange termination equipment fails.

3. System according to claim 1 characterised in that the exchange includes at least a first stage of optical couplers (40, 41) connected to said exchange termination equipments (ETE0, ..., ETE31) and to the optical distribution network (DN);
and in that the optical distribution network (DN) comprises:

- at least a second stage of optical couplers (31, ..., 34) connected to the first stage of optical couplers (40, 41) and to the customer premises networks (CPN0',..., CPN255'), and
- optical fibres (35, 36) connecting said first stage couplers to said second stage couplers, at least two optical fibres (35b, 36a) linking each second stage coupler (34) to at least one first stage coupler (41), using different paths, so that failure of either optical fibre does not prevent any customer premises network from being connected to at least one exchange termination equipment.

# FIG.1

# FIG.2

EP 0 568 454 B1

# FIG.3

# FIG.4

# FIG.5

# FIG.6

EP 0 568 454 B1

# FIG.7

LUEi

20

DN

21

22

23

24

ETENi

27

26

25

29

28

B

CU

# FIG.10

DN

EX'

CPN0'

31

35

b

ETE0'

32

33

34

36

a

40

41

CPN255'

ETE1'

ETE30'

ETE31'

# FIG.8

# FIG.9